# EUROPÄISCHE PATENTSCHRIFT

(11) **EP 3 507 228 B1**
(45) Veröffentlichungstag und Bekanntmachung des Hinweises auf die Patenterteilung: **07.10.2020**
(21) Anmeldenummer: 17758195.6
(22) Anmeldetag: 31.08.2017
(51) Int. Cl.: B66B 23/02, B66B 7/06

(54) **KETTENGLIED FÜR EINE HOCHBELASTBARE FÖRDERKETTE EINES FAHRSTEIGES, EINER FAHRTREPPE ODER EINES AUFZUGS**
CHAIN LINK FOR A HEAVY-DUTY CONVEYOR CHAIN OF A MOVING WALKWAY, AN ESCALATOR OR ELEVATOR
ARTICULATION DE CHAINE POUR UNE CHAINE DE TRANSPORT POUVANT SUPPORTER UNE CHARGE IMPORTANTE D'UN TROTTOIR ROULANT, D'UN ESCALIER ROULANT OU D'UN ASCENSEUR

(30) Priorität: 31.08.2016 EP 16186570
(43) Veröffentlichungstag der Anmeldung: 10.07.2019
(73) Patentinhaber: Inventio AG, 6052 Hergiswil (CH)
(72) Erfinder: WAGENLEITNER, Georg, 4575 Rossleithen (AT); GARTNER, Manfred, 2603 Felixdorf (AT); NOVACEK, Thomas, 2320 Schwechat (AT); BOROS, Csaba, 92901 Dunajska Streda (SK)
(86) Internationale Anmeldenummer: PCT/EP2017/071829
(87) Internationale Veröffentlichungsnummer: WO 2018/041931

(56) Entgegenhaltungen:
- US-A- 633 738
- US-A- 5 215 616
- US-A1- 2012 024 675

## Beschreibung

Die vorliegende Erfindung betrifft ein Kettenglied, welches zum Ausbilden einer in Zugrichtung hochbelastbaren Förderkette eines Fahrsteiges, einer Fahrtreppe oder eines Aufzugs geeignet ist. Ferner betrifft die Anmeldung eine mit einem solchen Kettenglied ausgebildete Förderkette. Weiterhin betrifft die Erfindung eine Transportbandförderanordnung für einen Fahrsteig oder eine Fahrtreppe mit einer solchen Förderkette sowie eine Aufzuganlage mit einer solchen Förderkette.

Fahrsteige, welche teilweise auch als Rollsteige bezeichnet werden, und Fahrtreppen, welche teilweise auch als Rolltreppen bezeichnet werden, werden im Allgemeinen dazu eingesetzt, Personen in einer horizontalen Richtung bzw. einer zur Horizontalen geneigten Richtung zu befördern. Bei Fahrsteigen ist dabei eine Vielzahl von Paletten parallel zueinander hintereinander angeordnet, so dass sie gemeinsam ein umlaufendes Transportband bilden. Ähnlich ist bei einer Fahrtreppe eine Vielzahl von Trittstufen hintereinander angeordnet und bildet ein umlaufendes Transportband.

Herkömmlich sind die Paletten bzw. Trittstufen meist an einer oder mehreren umlaufenden Förderketten befestigt. Parallel zueinander verlaufende Paletten bzw. Trittstufen sind dabei im Regelfall an beiden Seiten an jeweils einer Förderkette befestigt. Die umlaufende Förderkette kann dann mit einem Förderrad, wie beispielsweise einem Kettenrad, gefördert werden und dadurch die daran befestigten Paletten bzw. -stufen entlang eines gewünschten Verfahrwegs verlagert werden. Die an den Förderketten befestigten Trittstufen bzw. -steige bilden zusammen mit den typischerweise von einem Motor angetriebenen Förderrädern eine sogenannte Transportbandförderanordnung.

Die Förderkette ist dabei herkömmlich aus einer Vielzahl von Kettengliedern zusammengesetzt. Die Kettenglieder bestehen meist aus geeignet in Form gestanzten Metallblechen beziehungsweise Kettenlaschen. Hintereinander angeordnete Kettenglieder werden dabei im Allgemeinen über Kettenachsen, beispielsweise in Form von Bolzen, miteinander verbunden.

Förderketten müssen aber nicht zwingend aus Metall gefertigt sein. Beispielsweise wird in der US 5 215 616 A eine Förderkette für hochkorrosive und abrasive Umgebungen beschrieben, deren Kettenglieder aus Faserverbundwerkstoff gefertigt sind. Die als Schlaufen ausgebildeten Kettenglieder weisen Fasern auf, welche in einer harten Kunststoffharz- Matrix eingebettet sind.

Um einerseits eine Anzahl von Kettengliedern gering zu halten und um andererseits eine mechanische Belastbarkeit der Förderkette zu maximieren, können die Kettenglieder einer Förderkette für einen Fahrsteig bzw. eine Fahrtreppe verhältnismäßig lang sein. Beispielsweise kann ein einzelnes Kettenglied mehr als 100mm lang sein bzw. kann die Länge eines Kettenglieds sogar dem Abstand zwischen zwei hintereinander angeordneten Paletten bzw. -stufen von beispielsweise 400 bis 600mm entsprechen.

Während sich die Förderkette zwischen an entgegengesetzten Enden des Fahrsteiges bzw. der Fahrtreppe angeordneten Förderrädern größtenteils geradlinig oder allenfalls geringfügig gekrümmt erstreckt, muss die Förderkette an den entgegengesetzten Enden des Fahrsteiges bzw. der Fahrtreppe an den Förderrädern im Wesentlichen um 180° umgelenkt werden und bewegt sich dabei im Regelfall entlang eines Außenumfangs der mit der Förderkette in Eingriff stehenden Förderräder. Die Förderräder haben dabei typischerweise einen Durchmesser in einer Größenordnung von 700 bis 1200 mm.

Aufgrund der meist im Vergleich zum Durchmesser der Förderräder relativ langen Kettenglieder kommt es bei einem solchen Umlenken der Förderkette sofern keine speziellen Maßnahmen ergriffen werden regelmäßig zu sogenannten Polygoneffekten. Solche Polygoneffekte treten im Allgemeinen auf, wenn eine Förderkette durch ein Förderrad formschlüssig, das heißt beispielsweise durch Ineinandergreifen, angetrieben wird. Dabei kann die Förderkette auf dem Förderrad nicht kreisrund auf- bzw. ablaufen, so dass es zu Abwinkelungen dieser Förderkette zwischen den einzelnen Kettengliedern kommt. Die Förderkette legt sich daher aufgrund ihrer starren Kettenglieder substanzieller Länge entlang des Förderrades als ein Polygon (Vieleck) mit unterschiedlich vielen Sehnen entsprechend dem Durchmesser des Förderrades an. Dreht sich nun das Förderrad beispielsweise mit konstanter Winkelgeschwindigkeit, so kommt es durch die Polygonauflage der Förderkette zu unterschiedlichen Wirkradien. Eine Geschwindigkeit, mit der die Förderkette effektiv gefördert wird, schwankt dann periodisch. Des Weiteren können an der Förderkette unerwünschte Erregungen in Längs- und/oder Querrichtung der Förderkette auftreten, die zu Schwingungen führen können, die meist mit einer erhöhten Materialbelastung einhergehen. Polygoneffekte bei Fahrsteigen werden beispielsweise in der EP 1 876 135 B1 ausführlich beschrieben.

Die aus Polygoneffekten herrührenden ungleichförmigen, das heißt pulsierenden Bewegungen der Förderkette werden bei Fahrsteigen bzw. Fahrtreppen auf daran angebrachte Palette bzw. Trittstufen übertragen und sind wegen der daraus resultierenden Verringerung des Fahrkomforts äußerst unerwünscht. Dabei fallen Polygoneffekte umso stärker aus, je kleiner ein Durchmesser der Förderräder im Vergleich zu einer Länge der Kettenglieder der Förderkette gewählt wird. Andererseits wird zum Verringern eines für eine Transportbandförderanordnung notwendigen Bauraums angestrebt, den Durchmesser der Förderräder möglichst klein zu halten.

Um die Wirkung von Polygoneffekten zu verringern oder gar vollständig zu vermeiden, schlägt die EP 1 876 135 B1 eine speziell ausgestaltete Umlenkkurvenbahn vor. Die Förderkette ist dabei als Rollenkette ausgebildet, bei der starre Stahllaschen mittels Kettenbolzen verbunden sind und an den Kettenbolzen jeweils Rollen angebracht sind. Für die in der EP 1 876 135 B1 vorgeschlagene Transportbandförderanordnung sind für eine solche Rollenkette zwei parallele Fahrspuren vorgesehen, wobei abwechslungsweise jeweils eine Rolle über die Umlenkkurvenbahn geleitet wird und die andere Rolle im Eingriff mit dem als Kettenrad ausgebildeten Förderrad ist. Diese Lösung ist jedoch verhältnismäßig aufwendig und teuer.

Es wurden alternative Zugmittel für Fahrsteige und Fahrtreppen vorgeschlagen, bei denen die Paletten bzw. Trittstufen an Riemen oder Tragseilen befestigt sind und mit deren Hilfe gefördert werden. Solche nicht-kettenartigen Zugmittel und deren Einsatz beispielsweise in einem Fahrsteig werden zum Beispiel in der US 2012/085618 A1 und der US 7 344 015 B2 beschrieben. Bei einer Verwendung derartiger Zugmittel tritt im Allgemeinen kein Polygoneffekt auf.

Aufgrund einer Struktur der verwendeten Tragseile bzw. von in verwendeten Riemen verlaufenden Drahtlitzen neigen solche Zugmittel jedoch zu einer deutlich größeren Längung in Form einer Drahtseillängung im Vergleich zu einer typischerweise bei Förderketten mit vergleichbarer Zugfestigkeit auftretenden Kettenlängung. Zudem ist zumindest bei Fahrtreppen eine formschlüssige Kraftübertragung von einer Antriebswelle auf das Stufenband, wie sie bei einer mit einem Kettenrad in Eingriff stehenden Förderkette bewirkt werden kann, von erheblichem Vorteil, wohingegen eine Haftreibung zwischen einem Umlenkrad und dem Drahtseil bzw. Riemen meist nicht ausreicht.

Im Gegensatz zu Fahrsteigen und Fahrtreppen werden Aufzüge meist dazu eingesetzt, Personen oder Waren in vertikaler oder zur Horizontalen stark geneigter Richtung zu befördern. Oft wird eine Aufzugkabine dabei mithilfe eines sie haltenden Tragmittels innerhalb eines Aufzugschachts verlagert. Als Tragmittel werden meist biegeelastische Seile oder Riemen eingesetzt, welche dann meist über eine Traktionsscheibe einer Antriebseinheit gewunden werden und von dieser mithilfe eines angekoppelten Motors verlagert werden.

Auch in Aufzügen könnte eine Verwendung von Förderketten anstatt der bisher üblichen durchgehenden seil- bzw. riemenartigen Tragmittel vorteilhaft sein. Insbesondere können an einer solchen Förderkette Mitnehmerstrukturen einfach angebracht werden, beispielsweise indem diese an die einzelnen Kettenglieder verbindenden Kettenachsen oder Bolzen angebracht werden. Mit diesen Mitnehmerstrukturen können dann geeignet ausgebildete Strukturen einer zum Förderrad modifizierten Traktionsscheibe der Antriebsanordnung formschlüssig zusammenwirken.

Allerdings wurden Förderketten bisher in Aufzuganlagen aufgrund kaum oder nur aufwendig zu vermeidender Polygoneffekte und einem dadurch bewirkten ungleichmäßigen, ruckelnden Bewegen der Aufzugkabine nur selten eingesetzt.

Es kann ein Bedarf an einem Kettenglied für eine Förderkette eines Fahrsteiges, einer Fahrtreppe oder eines Aufzugs bestehen, bei dem unter anderem die oben beschriebenen Defizite herkömmlicher Förderketten zumindest weitgehend überwunden werden. Insbesondere kann ein Bedarf an einem solchen Kettenglied für eine Förderkette bestehen, mithilfe dessen die Förderkette derart ausgestaltet werden kann, dass bei deren Fördern keine oder allenfalls geringe Polygoneffekte auftreten. Ferner kann ein Bedarf an einem mechanisch hochbelastbaren, langfristig widerstandsfähigen und/oder kostengünstig herstellbaren Kettenglied bestehen. Außerdem kann ein Bedarf an einer mit einem solchen Kettenglied ausgebildeten Förderkette bestehen. Ferner kann ein Bedarf an einer mit einer solchen Förderkette ausgerüsteten Transportbandförderanordnung für einen Fahrsteig oder eine Fahrtreppe sowie einen damit ausgerüsteten Fahrsteig bzw. Fahrtreppe bestehen. Außerdem kann ein Bedarf an einer Aufzuganlage mit einer solchen Förderkette bestehen.

Solche Bedürfnisse können mittels der Gegenstände der unabhängigen Ansprüche erfüllt werden. Vorteilhafte Ausführungsformen sind in den abhängigen Ansprüchen sowie in der nachfolgenden Beschreibung angegeben.

Gemäß einem ersten Aspekt der Erfindung wird ein Kettenglied für eine in einer Zugrichtung hochbelastbare Förderkette eines Fahrsteiges, einer Fahrtreppe oder eines Aufzugs vorgeschlagen. Das Kettenglied weist zwei an entgegengesetzten Enden des Kettenglieds angeordnete Kettengliedverbinderaufnahmebereiche sowie eine die Kettengliedverbinderaufnahmebereiche umschlingende ringförmig geschlossene Schlaufe auf. Die Kettengliedverbinderaufnahmebereiche sind dazu ausgebildet, jeweils einen Kettengliedverbinder aufzunehmen, welcher zwei benachbarte Kettenglieder miteinander mechanisch derart verbindet, dass eine Zugkraft von einem Kettenglied auf das benachbarte Kettenglied übertragen werden kann. Die Schlaufe ist aus einem Faserverbundwerkstoff beziehungsweise Composite- Material ausgebildet. Der die Schlaufe bildende Faserverbundwerkstoff weist Fasern auf, welche in ein Elastomer-Matrixmaterial eingebettet sind. Die Fasern erstrecken sich längs entlang der ringförmigen Schlaufe. Aufgrund des Elastomer- Matrixmaterials ist das Kettenglied in einer Querrichtung zur Zugrichtung in Krümmungsradien kleiner als 500mm reversibel biegbar, ohne dass plastische Deformationen am Faserverbundwerkstoff auftreten.

Gemäß einem zweiten Aspekt der Erfindung wird eine Förderkette für einen Fahrsteig, eine Fahrtreppe oder einen Aufzug vorgeschlagen. Die Förderkette weist dabei eine Mehrzahl von Kettengliedern gemäß einer Ausführungsform des ersten Aspekts der Erfindung und eine Mehrzahl von Kettengliedverbindern auf. Benachbarte Kettenglieder sind dabei jeweils über in deren Kettengliedverbinderaufnahmebereiche eingreifende Kettengliedverbinder miteinander auf Zug belastbar verbunden.

Ein dritter Aspekt der Erfindung betrifft eine Transportbandförderanordnung für einen Fahrsteig oder eine Fahrtreppe. Die Transportbandförderanordnung weist eine Förderkette gemäß einer Ausführungsform des zweiten Aspekts der Erfindung, mehrere Paletten bzw. Trittstufen, welche an der Förderkette befestigt sind, ein Förderrad beziehungsweise Förderkettenrad zum Fördern der Förderkette sowie einen Antrieb zum Rotieren des Förderrades auf. An dem Förderrad sind nahe eines Außenumfangs des Förderrades mehrere Mitnehmerstrukturen zum Zusammenwirken mit der Förderkette und zum Fördern der Förderkette in Zugrichtung durch Rotieren des Förderrades angeordnet. Ferner ist an dem Förderrad nahe des Außenumfangs wenigstens eine Stützstruktur angeordnet, welche zumindest jeweils in Umfangsrichtung zwischen benachbarten Mitnehmerstrukturen angeordnet ist und welche dazu ausgelegt ist, Schlaufen der Förderkette in einem Bereich zwischen deren Kettengliedverbinderaufnahmebereichen von radial innen her abzustützen und dadurch während des Rotierens des Förderrades nach außen zu biegen.

Ein vierter Aspekt der Erfindung betrifft einen Fahrsteig oder eine Fahrtreppe, die eine Transportbandförderanordnung gemäß einer Ausführungsform des dritten Aspekts der Erfindung aufweisen.

Ein fünfter Aspekt der Erfindung betrifft eine Aufzuganlage, welche mindestens eine Aufzugskabine, mindestens eine Förderkette gemäß einer Ausführungsform des zweiten Aspekts der Erfindung und mindestens einen Antrieb zum Antreiben der Förderkette aufweist. Der Antrieb weist dabei ein Förderrad auf, an dem nahe eines Außenumfangs des Förderrades mehrere Mitnehmerstrukturen zum Zusammenwirken mit der Förderkette und zum Fördern der Förderkette in Zugrichtung durch Rotieren des Förderrades angeordnet sind. An dem Förderrad ist ferner nahe des Außenumfangs wenigstens eine Stützstruktur angeordnet, welche zumindest jeweils in Umfangsrichtung zwischen benachbarten Mitnehmerstrukturen angeordnet ist und welche dazu ausgelegt ist, Schlaufen der Förderkette in einem Bereich zwischen deren Kettengliedverbinderaufnahmebereichen von radial innen her abzustützen und dadurch während des Rotierens des Förderrades nach radial außen zu biegen.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend angemerkt, werden Förderketten bei Fahrsteigen, Fahrtreppen und zum Teil auch bei Aufzügen dazu eingesetzt, um durch mitfahrende Passagiere hochbelastete Komponenten wie Paletten, Trittstufen oder die Aufzugkabine fördern zu können. Die Förderkette ist dabei meist aus Kettengliedern zusammengesetzt, bei denen starre Stahllaschen durch Kettenbolzen miteinander verbunden sind. Solche Förderketten können hohen Zugbelastungen von meist deutlich über 50kN widerstehen.

Die einzelnen Kettenglieder sind dabei jedoch nicht nur in der Zugrichtung hochbelastbar, sondern auch in einer Richtung quer zu dieser Zugrichtung im Wesentlichen starr. Hierdurch bedingt treten beim Umlenken der Förderkette die oben beschriebenen Polygoneffekte auf.

Insbesondere um diese Polygoneffekte zu vermeiden, wird vorgeschlagen, eine Förderkette aus Kettengliedern zusammenzusetzen, welche einerseits zwar in Zugrichtung hochbelastbar sind, welche andererseits jedoch in einer Richtung quer zu dieser Zugrichtung eine gewisse Biegeelastizität aufweisen.

Insbesondere wird vorgeschlagen, jedes Kettenglied einerseits mit Kettengliedverbinderaufnahmebereichen zu versehen, über welche benachbarte Kettenglieder mithilfe von Kettengliedverbindern miteinander verbunden werden können. Jeder der Kettengliedverbinderaufnahmebereiche kann beispielsweise eine mechanisch verstärkte Struktur sein, wie zum Beispiel eine zylindrische Hülse, in die ein Kettengliedverbinder, wie beispielsweise ein zylindrischer Bolzen oder eine Achse, eingreifen kann. Der Kettengliedverbinderaufnahmebereich und der in ihn eingreifende Kettengliedverbinder sind dabei vorzugsweise geeignet aufeinander abgestimmt, so dass sich beide relativ zueinander verdrehen bzw. rotieren lassen.

Andererseits verfügt jedes Kettenglied über eine Schlaufe, welche die beiden Kettengliedverbinderaufnahmebereiche umschlingt und sie somit auf Zug belastbar miteinander verbindet. Die Schlaufe ist dabei ringförmig geschlossen und wird mithilfe eines Faserverbundwerkstoffs gebildet.

Unter einem Faserverbundwerkstoff wird hierbei ein aus wenigstens zwei Hauptkomponenten bestehender Mehrphasen- oder Mischwerkstoff verstanden, bei dem verstärkende Fasern in eine einbettende Matrix aufgenommen sind. Durch geeignete gegenseitige Wechselwirkungen der beiden Komponenten erhält ein solcher Faserverbundwerkstoff höherwertige Eigenschaften als jede der beiden einzelnen beteiligten Komponenten. In das Matrixmaterial eingebettete Fasern können dabei extrem dünn sein und beispielsweise Durchmesser im Bereich einiger weniger µm bis hin zu einigen 10 µm aufweisen. Dabei kommt dem Faserverbundwerkstoff zugute, dass ein Werkstoff in Faserform typischerweise in Faserrichtung eine vielfach größere Festigkeit aufweist als dasselbe Material in anderer Form. Je dünner dabei die Faser ist, desto größer ist ihre Festigkeit. Als Ursache hierfür kann angenommen werden, dass Molekülketten mit abnehmender zur Verfügung stehender Fläche zunehmend gleichgerichtet angeordnet sind. Außerdem werden Abstände zwischen möglicherweise bruchgefährdeten Fehlstellen innerhalb dünner Fasern sehr groß, so dass auch lange Fasern häufig weitgehend frei von solchen bruchgefährdeten Fehlstellen sind.

Das einbettende Matrixmaterial kann dabei unter anderem dazu dienen, die dünnen Fasern vor schädigenden Einflüssen wie beispielsweise Kerbkräften, korrosiv wirkenden Chemikalien etc. zu schützen. Das Matrixmaterial kann hierzu die Fasern vorzugsweise vollständig von allen Seiten umschließen. Für den vorgesehenen Einsatz eignen sich jedoch nur biegeelastische Matrixmaterialien, die bei wechselnder Biegebeanspruchung keine Risse bilden. Risse im Matrixmaterial würde zu lokalen Spannungsspitzen im Faserverbundwerkstoff führen und an diesen Stellen zu einer Überbelastung und zum Bruch der Fasern führen. Als Matrixmaterial eignen sich daher insbesondere Elastomere.

Mechanische Eigenschaften wie beispielsweise die maximal zulässige Zugkraft eines Faserverbundwerkstoffs hängen dabei oft maßgeblich von einer Art und Anzahl der darin verwendeten Fasern sowie einer Art, wie diese Fasern räumlich angeordnet sind, ab.

Für die hierin beschriebenen Kettenglieder kann es gemäß einer Ausführungsform dabei vorteilhaft sein, wenn der die Schlaufe bildende Faserverbundwerkstoff derart ausgebildet ist, dass die Schlaufe Kräfte in der Zugrichtung von mindestens 50kN, vorzugsweise mindestens 80kN, stärker bevorzugt mindestens 160kN, welche auf die Kettengliedverbinderaufnahmebereiche in entgegengesetzter Richtung wirken.

Mit anderen Worten sollte der für das Kettenglied verwendete Faserverbundwerkstoff geeignet konzipiert sein, um den während des Betriebs einer hiermit ausgestatteten Förderkette auf die Kettenglieder wirkenden erheblichen Zugkräfte problemlos widerstehen zu können. Der Faserverbundwerkstoff soll dabei die erheblichen Zugkräfte nicht nur unbeschädigt aufnehmen können, sondern sich dabei auch nicht wesentlich längen. Insbesondere soll bei den genannten Zugkräften keine Längenveränderung von beispielsweise mehr als 1% relativ auftreten. Insbesondere bei Förderketten für Fahrsteige und Fahrtreppen oder für Aufzüge, welche mithilfe eines mit der Förderkette formschlüssig zusammenwirkenden Förderrades angetrieben werden sollen, ist eine solche geringe maximal zulässige Längenänderung oft notwendig, um einen korrekten Betrieb der damit ausgestalteten Transportbandförderanordnung gewährleisten zu können. Sollte es zu deutlich größeren Längenänderungen in der Förderkette kommen, besteht ein Risiko, dass die Förderkette nicht mehr mit dem Förderrad in einer vorgesehenen Weise zusammenwirkt, sondern schlimmstenfalls von dem Förderrad abspringt oder abrutscht.

Um die gewünschte Zugfestigkeit bei minimaler Längenänderung für jedes der Kettenglieder erreichen zu können, sollte der die Schlaufe des Kettenglieds bildende Faserverbundwerkstoff bezüglich seiner mechanischen Eigenschaften geeignet angepasst werden. Dies kann einerseits durch eine geeignete Wahl der Anzahl und/oder des Durchmessers der darin verwendeten Fasern geschehen. Wichtiger noch für die Zugbelastbarkeit der von dem Faserverbundwerkstoff gebildeten Schlaufe erscheint jedoch die Orientierung, mit der die Fasern darin aufgenommen sind.

Neben einer hohen Zugbelastbarkeit jedes Kettenglieds, kann gemäß einer Ausführungsform, der die Schlaufe bildende Faserverbundwerkstoff derart ausgebildet sein, dass der Faserverbundwerkstoff sich bei in einer Querrichtung quer zur Zugrichtung auf den Faserverbundwerkstoff wirkenden Biegekräften reversibel in Krümmungsradien von weniger als 500mm, vorzugsweise sogar weniger als 200mm, biegen lässt. Die zulässige Untergrenze des Krümmungsradius ist dabei abhängig vom verwendeten Faserverbundwerkstoff. Wird diese Untergrenze unterschritten, bleibt eine irreversible beziehungsweise plastische Deformation der Schlaufe infolge geknickter Fasern und/oder gebrochenem Matrixwerkstoff und/oder der Faserverbundstoff delaminiert.

Mit anderen Worten soll der für das Kettenglied eingesetzte Faserverbundwerkstoff zwar einerseits derart ausgebildet sein, dass er hohen Zugkräften widerstehen kann, wenn diese beispielsweise in entgegengesetzter Richtung an den beiden Kettengliedverbinderaufnahmebereichen des Kettenglieds angreifen. Andererseits soll der Faserverbundwerkstoff aber in einer Querrichtung quer zu dieser Zugrichtung eine hohe Biegeelastizität aufweisen, die es ihm ermöglicht, reversibel in enge Biegungsradien von weniger als 500mm gebogen zu werden. Die dabei wirkenden Biegekräfte sind im Allgemeinen deutlich geringer als die auf das Kettenglied wirkenden Zugkräfte. Typischerweise beträgt die in Querrichtung auf den Faserverbundwerkstoff wirkende Biegekraft zwischen ¹/₁₀₀ und ¹/_{10'000} der maximal zulässigen Kraft in der Zugrichtung, um das Kettenglied in einen Biegeradius zwischen 50mm und 500mm reversibel zu biegen.

Aufgrund der beschriebenen bevorzugten Biegeelastizität kann eine Förderkette, die aus den mit Faserverbundwerkstoff-Schlaufen gebildeten Kettengliedern zusammengesetzt ist, beispielsweise in engen Krümmungsradien von 50mm um ein kleines Förderrad herumgewunden werden. Das Kettenglied kann dabei selbst in Bereichen zwischen dessen Kettengliedverbinderaufnahmebereichen in eine Krümmung gebogen werden, welche beispielsweise durch die an dem Förderrad vorgesehenen Stützstrukturen vorgegeben bzw. beeinflusst werden kann. Aufgrund einer solchen Biegbarkeit in Querrichtung bzw. im Betrieb erzwungenen Biegung können Polygoneffekte beim Umlaufen der Förderkette um den Außenumfang des Förderrades größtenteils vermieden werden. Hierbei muss das Förderrad aber eine an diese Biegsamkeit der Kettenglieder angepasste Teilung aufweisen.

Gemäß einer Ausführungsform ist dabei der die Schlaufe bildende Faserverbundwerkstoff bandförmig ausgebildet.

Unter "bandförmig" kann hierbei eine längliche Struktur mit flachem, beispielsweise rechteckigem, Querschnitt verstanden werden. Die Länge des Faserverbundwerkstoffs soll dabei wesentlich größer als dessen Breite sein und die Breite wiederum wesentlich größer als dessen Dicke sein. Die Dicke wird dabei in einer Richtung orthogonal zu einer Oberfläche der Schlaufe gemessen, mit der die Schlaufe die Kettengliedverbinderaufnahmebereiche umschlingt und diese dabei vorzugsweise mechanisch kontaktiert.

Eine solche aus einem bandförmigen Faserverbundwerkstoff gebildete Schlaufe kann einerseits in ihrer Längserstreckungsrichtung hohe Zugkräfte aufnehmen, andererseits bei in deren Dickenrichtung wirkenden Biegekräften problemlos reversibel gebogen werden.

Gemäß einer Ausführungsform weist der die Schlaufe bildende Faserverbundwerkstoff Fasern auf, welche in ein Elastomer- Matrixmaterial eingebettet sind. Die Fasern erstrecken sich dabei längs entlang der ringförmigen Schlaufe.

Mit anderen Worten sollen nicht nur die Fasern des Faserverbundwerkstoffs biegeelastisch sein, sondern auch das diese Fasern ummantelnde Matrixmaterial. Die Fasern erhalten dabei ihre Biegeelastizität größtenteils aufgrund ihrer geometrischen Ausbildung, das heißt aufgrund ihrer geringen Durchmesser. Das Elastomer-Matrixmaterial kann die Fasern mit einer relativ zum Durchmesser der Fasern wesentlich größeren Materialstärke umgeben. Während die Fasern meist deutlich weniger als 100µm Durchmesser aufweisen, kann ein umgebender Mantel aus Elastomer- Matrixmaterial beispielsweise mehrere 100µm oder gar einige mm dick sein. Der Mantel ist dabei nicht aufgrund seiner geometrischen Ausbildung, sondern aufgrund mechanischer Eigenschaften des für ihn verwendeten Materials biegeelastisch. Das Elastomer-Matrixmaterial kann beispielsweise Polyurethan, Silikon, Gummi, Butadien-Kautschuk, Butylkautschuk, Weich-Polyvinyl oder Ähnliches sein.

Die länglichen Fasern des Verbundwerkstoffmaterials erstrecken sich dabei längs der ringförmigen Schlaufe, das heißt im Wesentlichen parallel zu deren Erstreckungsrichtung, gegebenenfalls mit geringfügigen Abweichungen von beispielsweise weniger als 15°, vorzugsweise weniger als 5°, oder stärker bevorzugt weniger als 2°. Dies gilt zumindest für einen wesentlichen Anteil der in dem Faserverbundwerkstoff enthaltenen Fasern, welche dann für die Zugbelastbarkeit der Schlaufe sorgen. Es ist jedoch nicht ausgeschlossen, dass der Faserverbundwerkstoff auch Fasern enthält, welche nicht längs entlang der Schlaufe verlaufen. Beispielsweise können die Fasern in Form eines Geleges oder eines Gewebes in dem Faserverbundwerkstoff aufgenommen sein.

Gemäß einer Ausführungsform können die in dem Faserverbundwerkstoff aufgenommenen Fasern Kohlenstofffasern, Glasfasern und/oder Metallfasern sein.

Insbesondere Faserverbundwerkstoffe mit in ein Elastomer- Matrixmaterial eingebetteten Kohlenstofffasern, teilweise auch als Karbonfasern bezeichnet, haben sich als in einer Längsrichtung parallel zu einer Erstreckungsrichtung der Kohlenstofffasern höchst belastbar auf Zug herausgestellt. Kohlenstofffasern sind dabei industriell hergestellte Fasern aus kohlenstoffhaltigen Ausgangsmaterialien, die durch an den Rohstoff angepasste chemische Reaktionen in graphitartig angeordneten Kohlenstoff umgewandelt werden. Insbesondere anisotrope Fasern zeigen hohe Festigkeiten und Steifigkeiten bei gleichzeitig geringer Bruchdehnung in axialer Richtung. Kohlenstofffasern haben typischerweise Durchmesser im Bereich von 5 bis 10µm. Meist werden eine Vielzahl, oft mehrere Tausend Filamente zusammengefasst und zum Beispiel zu Geweben, Geflechten, Gelegen oder Multiaxialgelegen verarbeitet. Dabei werden verschiedene Kohlenstofffasertypen unterschieden. Für die Verwendung in Kettengliedern haben sich Faserverbundwerkstoffe mit hochfesten Kohlenstofffasern (HT-Fasern - High Tensity) als geeignet erwiesen, Faserverbundwerkstoffe mit hochsteifen Kohlenstofffasern (HM-Fasern - High Modulus) erscheinen jedoch noch vorteilhafter.

Alternativ zu oder in Kombination mit den Kohlenstofffasern können auch Glasfasern in dem Faserverbundwerkstoff eingesetzt werden. Als weitere Alternative können dünnste Metallfasern in den Faserverbundwerkstoff aufgenommen sein und für dessen Zugbelastbarkeit sorgen.

Je nach Material und Art der in dem Faserverbundwerkstoff verwendeten Fasern kann der Faserverbundwerkstoff ein Elastizitätsmodul in Zugrichtung von deutlich über 100kN/mm² aufweisen, so dass bei Belastung in Zugrichtung keine wesentliche Längung der mit dem Faserverbundwerkstoff gebildeten Schlaufe, vorzugsweise gleich oder weniger als 1% auftritt.

Gemäß einer Ausführungsform erstreckt sich wenigstens eine Faser des Faserverbundwerkstoffs ringförmig gewickelt mehrfach entlang der Schlaufe.

Vorzugsweise wird die gesamte Schlaufe von einem Faserverbundwerkstoff gebildet, bei dem eine einzige sehr lange Faser oder lediglich eine verhältnismäßig kleine Anzahl von sehr langen Fasern in dem Faserverbundwerkstoff aufgenommen ist und dabei vielfach, beispielweise einige hundert oder gar einige tausend Mal, ringförmig entlang der Schlaufe gewickelt ist. Die einzelnen Wicklungen erstrecken sich dabei im Wesentlichen parallel zueinander und sorgen für die Zugbelastbarkeit der Schlaufe.

Gemäß einer Ausführungsform weist die Schlaufe des Kettenglieds einen Umfang von wenigstens 800mm, vorzugsweise wenigstens 1000mm, auf.

Mit anderen Worten kann die die Kettengliedverbinderaufnahmebereiche umschlingende Schlaufe, welche letztendlich die Länge des durch sie gebildeten Kettenglieds angibt, bezüglich ihres Umfangs derart groß ausgebildet sein, dass die Länge der Schlaufe im Wesentlichen der Länge einer Palette bzw. einer Trittstufe des Fahrsteiges bzw. der Fahrtreppe entspricht, deren Förderkette mit den Kettengliedern gebildet werden soll. Eine Palette bzw. eine Trittstufe sind dabei typischerweise mindestens 400mm, oft etwa 600mm, lang.

Mithilfe von Ausführungsformen der beschriebenen Kettenglieder kann eine Förderkette zusammengesetzt werden, die einerseits den hohen Zugbelastungen, wie sie bei deren Einsatz in einer Fahrtreppe oder einem Fahrsteig oder gegebenenfalls in einem Aufzug auftreten, standhalten kann und bei der andererseits die einzelnen Kettenglieder quer zur Zugrichtung elastisch gebogen werden können. Benachbarte Kettenglieder sind dabei jeweils über in deren Kettengliedverbinderaufnahmebereiche eingreifende Kettengliedverbinder miteinander auf Zug belastbar verbunden.

Gemäß einer Ausführungsform können die Kettengliedverbinder hierbei jeweils ein Basiselement aufweisen, von dem seitlich zwei zueinander beabstandete Kettenachsen abragen. Eine Kettenachse greift dabei in den Kettengliedverbinderaufnahmebereich eines Kettenglieds ein und die andere Kettenachse greift in den Kettengliedverbinderaufnahmebereich des benachbarten Kettenglieds ein.

Das Basiselement des Kettengliedverbinders kann dabei als separates Element beispielsweise in Form eines Blechs oder eines Profils vorgesehen sein, von dem die beiden Kettenachsen seitlich abragen. Alternativ können als Basiselement auch andere Komponenten der Förderkette oder der mit ihrer Hilfe ausgebildeten Transportbandförderanordnung dienen. Beispielsweise kann an einer Palette oder einer Trittstufe seitlich ein oder mehrere Bolzen abragen, die als Kettenachsen zum Eingriff in einen Kettengliedverbinderaufnahmebereich des Kettenglieds wirken können. Gegebenenfalls können an einer solchen Kettenachse auch eine oder mehrere Führungsrollen für die Paletten bzw. die Trittstufe angebracht sein.

Die Kettenachsen können vorzugsweise formschlüssig mit den Kettengliedverbinderaufnahmebereichen zusammenwirken, beispielsweise in eine einen solchen Kettengliedverbinderaufnahmebereich bildende Öffnung eingreifen. Die Kettenachsen können als einfache Bolzen, beispielsweise zylindrische Bolzen, ausgeführt sein.

Die Kettenachsen können in Zugrichtung voneinander beabstandet angeordnet sein. Dabei können die Kettenachsen von dem Basiselement an einer gleichen Seite abragen und/oder an entgegengesetzten Seiten des Basiselements angeordnet sein.

Unter Verwendung der beschriebenen Förderkette kann unter anderem eine Transportbandförderanordnung für den Fahrsteig oder die Fahrtreppe ausgebildet werden, indem Paletten bzw. Trittstufen derselben an der Förderkette befestigt werden. Die Transportbandförderanordnung verfügt dabei ferner über ein spezielles Förderrad und einen dieses Förderrad antreibenden Motor, mithilfe derer die Förderkette in Zugrichtung bewegt werden kann.

Ähnlich wie herkömmliche Förderräder von Fahrsteigen oder Fahrtreppen verfügt das Förderrad nahe seines Außenumfangs über mehrere Mitnehmerstrukturen, mithilfe derer das Förderrad mit der Förderkette zusammenwirken kann und die Förderkette durch Rotieren des Förderrades in Zugrichtung bewegen kann. Das Förderrad kann dabei hinsichtlich seiner Mitnehmerstrukturen ähnlich wie ein Kettenrad ausgebildet sein, das heißt Vorsprünge oder Ausnehmungen an seinem Außenumfang aufweisen, mit denen es mit entsprechend komplementär ausgebildeten Strukturen an der Förderkette formschlüssig zusammenwirken kann.

Zusätzlich zu diesen Mitnehmerstrukturen sollen an dem hier speziell beschriebenen Förderrad eine oder mehrere Stützstrukturen angeordnet sein. Auch diese Stützstrukturen befinden sich nahe dem Außenumfang des Förderrades. Meist sind die Stützstrukturen jedoch geringfügig weiter radial innerhalb an dem Förderrad angeordnet als die Mitnehmerstrukturen. Beispielsweise können ein oder mehrere Stützstrukturen in Axialrichtung von einer Stirnfläche des Förderrades abragen. Die Stützstruktur bzw. die Stützstrukturen sind dabei zumindest in Teilbereichen zwischen in Umfangsrichtung benachbarten Mitnehmerstrukturen angeordnet. Dabei können sie in unterschiedlicher geometrischer Weise ausgebildet sein. Beispielsweise können mehrere Stützstrukturen als punktuell von dem Förderrad abragende Strukturen wie z.B. Stifte oder Bolzen ausgebildet sein. Alternativ können sie als zum Beispiel teilkreisförmige längliche kulissenartig abragende Strukturen ausgebildet sein. Dabei sollen die Stützstrukturen derart ausgestaltet sein, dass sie, wenn das Förderrad rotiert wird und es dabei die mit ihm zusammenwirkende Förderkette bewegt, zumindest Teilbereiche der biegeelastischen Schlaufen der Förderkette zwischen deren Kettengliedverbinderaufnahmebereichen lokal oder flächig von radial innen her abstützen und diese dadurch während des Rotierens des Förderrades radial nach außen biegen.

Mit anderen Worten kann bei der hier vorgeschlagenen Transportbandförderanordnung jedes Kettenglied der Förderkette mit seiner Schlaufe geradlinig angeordnet sein, solange das Kettenglied lediglich auf Zug belastet ist. Kommt das Kettenglied jedoch bei dem Förderrad der Transportbandförderanordnung an, wird die Schlaufe des Kettenglieds von der an dem Förderrad vorgesehenen Stützstruktur lokal von radial innen her abgestützt. Da das zur Bildung der Schlaufe verwendete Faserverbundmaterial ein Elastomer und daher biegeelastisch ist, wird die Schlaufe dadurch nach radial außen gebogen. Dabei folgt die Schlaufe im Wesentlichen dem Umfang des Förderrades bzw. erstreckt sich parallel zu diesem. Durch das Biegen der Schlaufe der Kettenglieder können Polygoneffekte beim Fördern der Förderkette weitgehend vermieden oder sogar vollständig verhindert werden.

Gemäß einer Ausführungsform wirken die Paletten bzw. Trittstufen des Fahrsteiges bzw. der Fahrtreppe als Kettengliedverbinder. Dabei ragen von den Paletten bzw. Trittstufen jeweils zwei zueinander beabstandete Kettenachsen seitlich ab. Eine der Kettenachsen greift in den Kettengliedverbinderaufnahmebereich eines Kettenglieds ein, wohingegen die andere Kettenachse in den Kettengliedverbinderaufnahmebereich des benachbarten Kettenglieds eingreift.

Mit anderen Worten brauchen zum Verbinden benachbarter Kettenglieder nicht notwendigerweise separate Bauelemente als Kettengliedverbinder bereitgestellt werden, sondern diese Aufgabe kann von den Paletten bzw. Trittstufen selbst übernommen werden, indem von diesen Paletten bzw. Trittstufen an geeigneten Stellen Kettenachsen seitlich abragen.

Gemäß einer Ausführungsform sind an der Förderkette Koppelstrukturen vorgesehen, die an den Kettengliedverbinderaufnahmebereichen befestigt sind und die seitlich neben den Schlaufen angeordnet sind. Die Mitnehmerstrukturen sind in diesem Fall entlang des Außenumfangs des Förderrades angeordnet und dazu ausgebildet, mit diesen Koppelstrukturen formschlüssig zusammenzuwirken. Die Stützstruktur ist hierbei an einer zu den Schlaufen der Kettenglieder gerichteten Stirnseite des Förderrades angeordnet und ragt von dieser Stirnseite in Axialrichtung ab.

Anders ausgedrückt können an der Förderkette spezielle Koppelstrukturen vorgesehen sein, mithilfe derer die Förderkette mit den an dem Förderrad ausgebildeten Mitnehmerstrukturen zusammenwirken kann. Die Koppelstrukturen stehen mit den Kettengliedverbinderaufnahmebereichen in Verbindung und sind beispielsweise in diesen eingreifend befestigt. Dabei befinden sich die Koppelstrukturen seitlich neben den Schlaufen der Kettenglieder. Wenn die Förderkette mit ihren Koppelstrukturen formschlüssig mit den Mitnehmerstrukturen des Förderrades zusammenwirkt, um durch Drehen beziehungsweise Rotieren des Förderrades die Förderkette zu verlagern, kommen die an der Stirnseite des Förderrades angeordneten Stützstrukturen von radial innen her in Anlage gegen die Schlaufen der Kettenglieder und biegen diese nach radial außen hin durch. Hierdurch werden Polygoneffekte beim Umlenken der Förderkette um das Förderrad weitgehend minimiert oder sogar verhindert.

Gemäß einer konkreten Ausführungsform können die Koppelstrukturen als um eine Achse drehbare Führungsrollen ausgebildet sein, deren Achse in jeweils einen der Kettengliedverbinderaufnahmebereiche eingreift. Die Mitnehmerstrukturen sind in diesem Fall als komplementär zu diesen Führungsrollen geformte Ausnehmungen in dem Förderrad ausgebildet.

Anders ausgedrückt können an der Förderkette Führungsrollen beziehungsweise Laufrollen vorgesehen sein, welche über eine jeweilige Achse in einen der Kettengliedverbinderaufnahmebereiche eines Kettenglieds eingreifen. Die Führungsrollen können dabei z.B. dazu dienen, die Förderkette während ihrer Bewegung entlang eines Verfahrweges zum Beispiel seitlich zu führen und/oder vertikal abzustützen. Sobald ein Kettenglied zusammen mit seinen Führungsrollen beziehungsweise Laufrollen in den Bereich eines Förderrades gelangt, können die Führungsrollen die Funktion der Koppelstrukturen übernehmen und mit den Mitnehmerstrukturen des Förderrades zusammenwirken. Die Mitnehmerstrukturen können dabei beispielsweise als Ausnehmungen komplementär zu den Führungsrollen ausgebildet sein, so dass eine Führungsrolle in eine solche Ausnehmung formschlüssig eingreifen kann.

Neben der zuvor beschriebenen Möglichkeit, die hierin vorgestellte Förderkette für eine Transportbandförderanordnung für einen Fahrsteig oder eine Fahrtreppe einzusetzen, besteht auch grundsätzlich die Möglichkeit, eine solche Förderkette als Tragmittel in einer Aufzuganlage zu verwenden. Analog wie bei den Fahrsteigen und Fahrtreppen kann ein von einem Antrieb angetriebenes Förderrad an seinem Außenumfang Mitnehmerstrukturen aufweisen, mithilfe derer das Förderrad mit der Förderkette, beispielsweise mit daran angebrachten Koppelstrukturen, zusammenwirken kann und die Förderkette auf diese Weise durch formschlüssigen Eingriff fördern kann. Nahe dem Außenumfang können wiederum eine oder mehrere Stützstrukturen vorgesehen sein, mithilfe derer die Schlaufen der Förderkette in einem Bereich zwischen deren Kettengliedverbinderaufnahmebereichen von radial innen her abgestützt werden können, um dadurch die Schlaufen nach radial außen zu biegen, wenn die Förderkette über das Förderrad geführt wird.

Es wurde erkannt, dass mithilfe der hierin vorgestellten Förderkette mit biegeelastischen einzelnen Kettengliedern Vorteile herkömmlicher Förderketten mit denjenigen herkömmlicher biegeelastischer Seile oder Riemen kombiniert werden können. Insbesondere können einerseits Polygoneffekte vermieden werden, andererseits kann ein formschlüssiger Eingriff zwischen dem Förderrad und der Förderkette zu einer besseren Kraftübertragung zwischen dem Antrieb und der Förderkette führen.

Die vorgeschlagene Aufzuganlage kann dabei in unterschiedlicher Weise ausgestaltet sein. Beispielsweise kann die Förderkette ein Gegengewicht der Aufzuganlage mit der Aufzugkabine der Aufzuganlage verbinden und ein die Förderkette antreibender Antrieb stationär in einem Aufzugschacht oder einem an diesen Aufzugschacht angrenzenden Maschinenraum angeordnet sein. Die Förderkette kann dann geeignet verlagert werden, um die Aufzugkabine sowie das Gegengewicht in gegenläufigen Richtungen innerhalb des Aufzugschachts zu bewegen. Die Förderkette wird dabei relativ zu dem Aufzugschacht verlagert.

Alternativ kann der Antrieb der Aufzuganlage direkt an der Aufzugkabine bzw. dem Gegengewicht selbst angeordnet sein. Die Förderkette kann in diesem Fall beispielsweise stationär in dem Aufzugschacht angeordnet sein. Aufgrund des möglichen formschlüssigen Eingriffs zwischen der Förderkette und dem Förderrad des Antriebs kann der Antrieb sich dann entlang der stationären Förderkette bewegen und auf diese Weise die Aufzugkabine bzw. das Gegengewicht innerhalb des Aufzugschachts verlagern.

Es wird daraufhingewiesen, dass einige der möglichen Merkmale und Vorteile der Erfindung hierin mit Bezug auf unterschiedliche Ausführungsformen beschrieben sind. Insbesondere sind mögliche Merkmale teilweise mit Bezug auf ein Kettenglied, teilweise mit Bezug auf eine Förderkette, teilweise mit Bezug auf eine Transportbandförderanordnung für einen Fahrsteig bzw. eine Fahrtreppe und teilweise mit Bezug auf eine Aufzuganlage beschrieben. Ein Fachmann erkennt, dass die Merkmale in geeigneter Weise übertragen, kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Übersichtsansicht einer Fahrtreppe, in der eine Ausführungsform einer Förderkette gemäß einer Ausführungsform der vorliegenden Erfindung eingesetzt werden kann.
Fig. 2 zeigt eine perspektivische Ansicht eines Endbereichs einer Fahrtreppe.
Fig. 3 zeigt miteinander verbundene Kettenglieder einer Förderkette gemäß einer Ausführungsform der vorliegenden Erfindung.
Fig. 4 zeigt einen Teilbereich einer Transportbandförderanordnung mit einer Förderkette gemäß einer Ausführungsform der vorliegenden Erfindung.
Fig. 5 zeigt eine an einem Förderrad umgelenkte Förderkette gemäß einer Ausführungsform der vorliegenden Erfindung.
Fig. 6 zeigt miteinander verbundene Kettenglieder einer Förderkette gemäß einer alternativen Ausführungsform der vorliegenden Erfindung.
Fig. 7 zeigt miteinander verbundene Kettenglieder einer Förderkette gemäß einer weiteren alternativen Ausführungsform der vorliegenden Erfindung.
Fig. 8 zeigt eine Übersichtsansicht einer Aufzuganlage, in der eine Ausführungsform einer Förderkette gemäß einer Ausführungsform der vorliegenden Erfindung eingesetzt werden kann.

Die Figuren sind lediglich schematisch und nicht maßstabsgetreu. Gleiche Bezugszeichen bezeichnen in den verschiedenen Figuren gleiche oder gleichwirkende Merkmale

Während Ausführungsformen der hierin vorgeschlagenen Kettenglieder bzw. der daraus zusammensetzbaren Förderketten zu verschiedenen Zwecken, insbesondere in Fahrsteigen, Fahrtreppen und Aufzügen, eingesetzt werden können, werden mögliche Ausgestaltungen derselben nachfolgend hauptsächlich am Beispiel eines Einsatzes bei einer Fahrtreppe beschrieben.

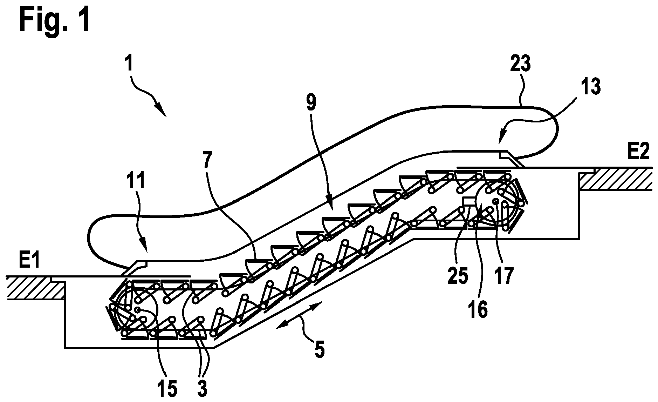

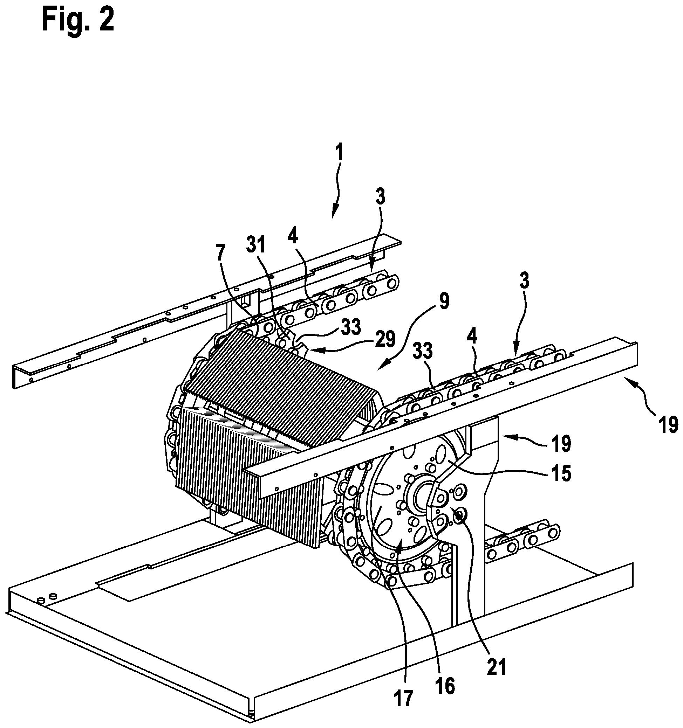

Fig. 1 zeigt eine beispielhafte Fahrtreppe 1, mithilfe derer Personen beispielsweise zwischen zwei Niveaus E1, E2 befördert werden können. Fig. 2 zeigt eine perspektivische Ansicht eines Endbereichs einer solchen Fahrtreppe 1 mit einer herkömmlichen Förderkette.

Die Fahrtreppe 1 weist zwei ringförmig geschlossene Förderketten 3 auf. Die beiden Förderketten 3 sind aus einer Vielzahl von Kettengliedern 4 zusammengesetzt. Bei den dargestellten herkömmlichen Förderketten 3 sind die Kettenglieder 4 als starre, aus Metallblech geformte Kettenaschen ausgebildet. Die beiden Förderketten 3 können entlang eines Verfahrwegs in Verfahrrichtungen 5 verlagert werden. Die Förderketten 3 verlaufen parallel zueinander und sind dabei in einer Richtung quer zu der Verfahrrichtung 5 voneinander beabstandet.

Zwischen den beiden Förderketten 3 erstrecken sich mehrere Trittstufen 7. Jede Trittstufe 7 ist dabei nahe ihren seitlichen Enden an jeweils einer der Förderketten 3 befestigt und kann somit mithilfe der Förderketten 3 in den Verfahrrichtungen 5 verfahren werden. Die an den Förderketten 3 geführten Trittstufen 7 bilden dabei ein Transportband 9. Um die Förderketten 3 verlagern zu können, verfügt die Fahrtreppe 1 über eine Antriebsanordnung 25 (welche in Figur 1 lediglich sehr schematisch angedeutet ist).

Im Bereich eines unteren Zugangs 11 sowie im Bereich eines oberen Zugangs 13 werden die Förderketten 3 des Transportbands 9 mithilfe von Umlenkrädern 15, 17 umgelenkt. Die Umlenkräder 15, 17 sind hierbei als Kettenräder mit einer Außenverzahnung 29 ausgebildet, bei der zwischen benachbarten Ausnehmungen 33 nach außen abragende Zähne 31 in Vertiefungen in der Förderkette 3 eingreifen. Die Umlenkräder 15, 17 sind dabei an einer tragenden Struktur 19, welche meist in Form einer Fachwerkstruktur ausgebildet ist, über Lager 21 drehbar gelagert gehalten. Wenigstens eines, vorzugsweise jedoch zwei nebeneinander angeordnete der Umlenkräder 15, 17 werden von der Antriebsanordnung 25 angetrieben und wirken somit als Förderräder 16.

Die Fahrtreppe 1 verfügt ferner über einen Handlauf 23, welcher im Allgemeinen zusammen mit den Förderketten 3 angetrieben wird und sich somit synchron mit dem Transportband 9 bewegt.

Bei der in Fig. 2 dargestellten Fahrtreppe 1 sind die Kettenglieder 4 der Förderkette 3 in Relation zu einem Durchmesser der Umlenkräder 17 bzw. Förderräder 16 relativ kurz. Beim Umlenken der Förderkette 3 mit ihren starren Kettengliedern 4 treten zwar Polygoneffekte auf, diese werden jedoch bei derartigen Größenverhältnissen der Kettenglieder 4 in Relation zu den Umlenkrädern 17 gering ausfallen und werden bisher meist toleriert.

Allerdings kann aus Gründen einer Bauraumminimierung angestrebt werden, Umlenkräder 17 mit kleinerem Durchmesser auszubilden. Ergänzend oder alternativ kann vorgesehen werden, längere Kettenglieder 4 einzusetzen. Jede dieser Maßnahmen führt dazu, dass Polygoneffekte verstärkt auftreten und ein dadurch bewirktes ungleichmäßiges Fördern des Transportbandes 9 oft nicht mehr tolerierbar ist.

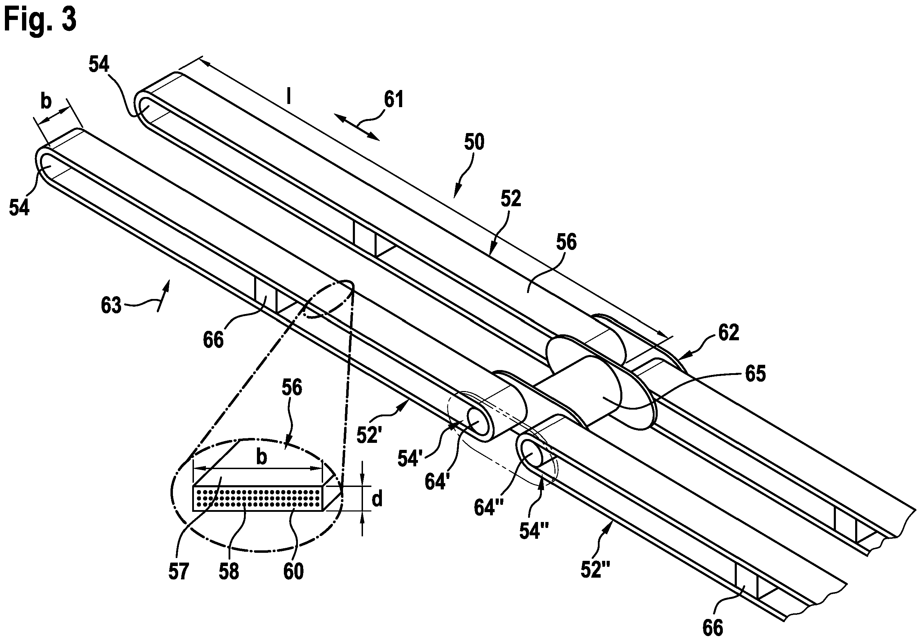

Fig. 3 zeigt eine Ausführungsform einer Förderkette 50, wie sie in Fahrtreppen 1 oder auch in Fahrsteigen oder Aufzügen eingesetzt werden kann, mithilfe derer ein Auftreten von Polygoneffekten beim Umlenken der Förderkette 50 weitgehend vermieden werden kann.

Die Förderkette 50 weist mehrere Kettenglieder 52 auf. Jedes Kettenglied 52 weist dabei eine ringförmig geschlossene Schlaufe 56 auf. Die Schlaufe 56 ist dabei langgezogen, das heißt in überwiegenden Teilen der Schlaufe 56 verlaufen gegenüberliegende Bereiche der Schlaufe weitgehend parallel zueinander und lediglich an entgegengesetzten Enden ist die Schlaufe um etwa 180° gekrümmt.

An den gegenüberliegenden Enden der Schlaufe 56 umschlingt diese dabei jeweils Kettengliedverbinderaufnahmebereiche 54. Diese Kettengliedverbinderaufnahmebereiche 54 können in unterschiedlicher Weise ausgestaltet sein und dienen jeweils dazu, Teile eines Kettengliedverbinders 62 aufzunehmen. Beispielsweise können die Kettengliedverbinderaufnahmebereiche 54 lediglich mechanisch verstärkte Bereiche der Schlaufe 56 sein, um die Kettengliedverbinder 62 dort zuverlässig und verschleißarm aufnehmen zu können. Alternativ können die Kettengliedverbinderaufnahmebereiche 54 auch mithilfe zusätzlicher lokal vorgesehener Hülsen oder Ähnlichem ausgestaltet sein, um das Material der Schlaufe 56 vor Beschädigungen insbesondere durch eingreifende Teile der Kettengliedverbinder 62 zu schützen.

Wie in dem vergrößerten Querschnitt in Fig. 3 dargestellt, wird die Schlaufe 56 mithilfe eines Faserverbundwerkstoffs 57 gebildet. Der Faserverbundwerkstoff 57 verfügt dabei über eine Vielzahl parallel zueinander verlaufender länglicher Fasern 58, beispielsweise Kohlenstofffasern. Diese Fasern 58 sind in ein Elastomer- Matrixmaterial 60 wie beispielsweise Polyurethan oder Silikon eingebettet. Die Fasern 58 verlaufen dabei weitgehend parallel zueinander und/oder längs entlang der ringförmigen Schlaufe 56. Somit erstrecken sich die Fasern 58 über weite Bereiche hin parallel zu einer Zugrichtung 61, entlang derer in der Förderkette 50 Zug auf die einzelnen Kettenglieder 52 durch die an deren entgegensetzten Enden eingreifenden Kettengliedverbinder 62 ausgeübt wird.

Der für die Schlaufe 56 verwendete Faserverbundwerkstoff 57 ist dabei bandförmig ausgebildet. Eine Länge 1 der Schlaufe 56 in Zugrichtung 61 kann dabei mehrere 100mm, beispielsweise zwischen 400 und 600mm, lang sein. Eine Breite b kann zwischen mehreren Millimetern und mehreren Zentimetern betragen. Eine Dicke d wird im Regelfall kleiner als 2cm sein, meist sogar nur wenige Millimeter betragen.

Aufgrund der geometrischen Ausgestaltung des bandartig ausgebildeten Faserverbundwerkstoffs 57 der Schlaufe 56 sowie der darin angeordneten Fasern 58 und der Biegeelastizität des umgebenden Elastomer- Matrixmaterials 60 kann das Kettenglied 52 einerseits sehr hohe Zugbelastungen im Bereich von meist mehreren 10kN, oft sogar mehr als 80kN oder gar 160kN schädigungsfrei und weitgehend ohne erhebliche Längendehnungen (zum Beispiel weniger als 1% relativ) halten. Andererseits kann sich das Kettenglied 52 insbesondere bei quer zu der Zugrichtung 61 in einer Biegerichtung 63 wirkenden Kräften, d.h. bei Biegekräften orthogonal zur Haupterstreckungsebene der bandartigen Schlaufe 56, problemlos in kleine Biegungsradien von beispielsweise weniger als 500mm biegen lassen.

Bei dem in Fig. 3 dargestellten Beispiel sind die Kettengliedverbinder 62 der Förderkette 50 mit Basiselementen 65 ausgebildet, von denen sich an zwei gegenüberliegenden Seiten jeweils Paare mit zwei Kettenachsen 64 abragend erstrecken. Die beiden Kettenachsen 64 eines Paares sind dabei jeweils in Zugrichtung 61 hintereinander angeordnet und erstrecken sich im Wesentlichen parallel zu der Richtung der Breite b der bandförmigen Schlaufe 56. Eine vordere Kettenachse 64' des Kettengliedverbinders 62 greift dabei in den Kettengliedverbinderaufnahmebereich 54' am hinteren Ende eines vorderen Kettenglieds 52' ein, wohingegen die zweite Kettenachse 64" in den Kettengliedverbinderaufnahmebereich 54" am vorderen Ende eines damit zu koppelnden weiteren Kettenglieds 52" eingreift. Über das die beiden Kettenachsen 64', 64" verbindende Basiselement 65 sind dann die beiden Kettenglieder 52', 52" in Zugrichtung 61 belastbar miteinander gekoppelt.

Im dargestellten Beispiel sind dabei an beiden gegenüberliegenden Seiten des Basiselements 65 jeweils Paare von Kettenachsen 64 ausgebildet, so dass von einem Kettengliedverbinder 62 jeweils Paare von zwei nebeneinander angeordneten Kettengliedern 52 miteinander verbunden werden können.

Um unter anderem Bereiche der Schlaufe 56 der Kettenglieder 52 zwischen den an den entgegengesetzten Enden vorgesehenen Kettengliedverbinderaufnahmebereichen 54 gegen Beschädigung zu schützen, können diese durch Abstandshalter 66 voneinander beabstandet gehalten werden. Diese Abstandshalter 66 können zentral, beispielsweise mittig, zwischen den Kettengliedverbinderaufnahmebereichen 54 angeordnet sein. Die Abstandhalter 66 können eine beliebige Form aufweisen, müssen aber biegeelastisch sein und dürfen keine Knickstellen in der Schlaufe 56 verursachen, wenn diese quer zur Zugrichtung 61 gebogen wird. Gegebenenfalls erstreckt sich der Abstandhalter 66 durchgehend zwischen den Kettengliedverbinderaufnahmebereichen 54 eines Kettengliedes 52 oder es kann auf den Abstandhalter 66 ganz verzichtet werden.

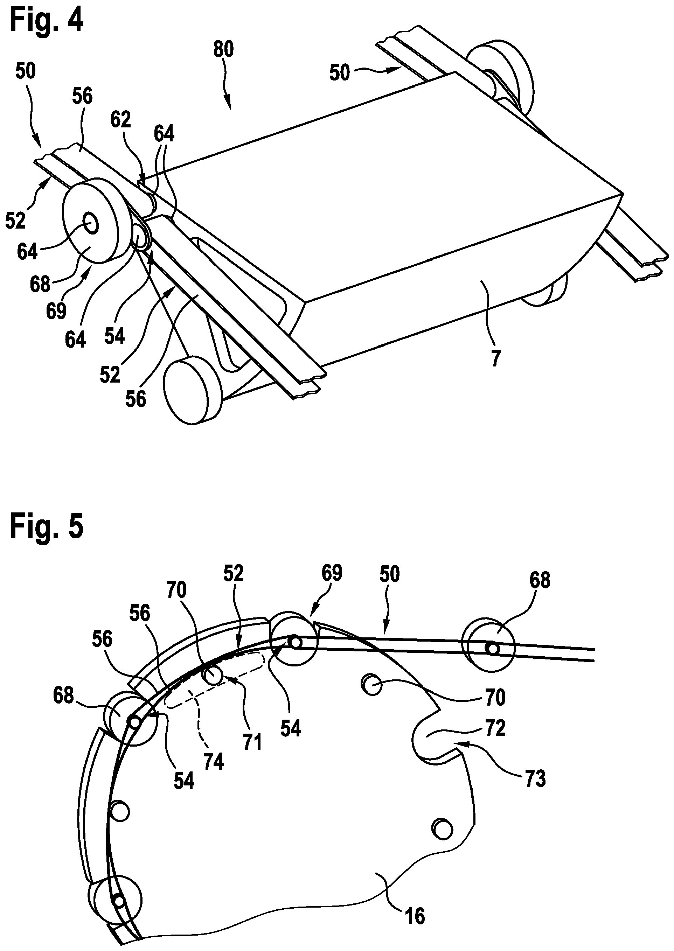

Fig. 4 zeigt einen Teilbereich einer Transportbandförderanordnung 80 für eine Fahrtreppe 1. Die Transportbandförderanordnung 80 umfasst dabei neben zwei Förderketten 50 und daran und zwischen diesen angebrachten Trittstufen 7 auch ein Förderrad 16 sowie einen Antrieb 25 zum rotierenden Antreiben des Förderrades 16 (in Fig. 4 nicht dargestellt).

Bei dem in Fig. 4 dargestellten Ausführungsbeispiel wirken von der Trittstufe 7 seitlich abragende Paare von Kettenachsen 64 als Kettengliedverbinder 62. Die Kettenachsen 64 sind dabei in Zugrichtung 61 wiederum hintereinander angeordnet und jede Kettenachse 64 greift in einen Kettengliedverbinderaufnahmebereich 54 eines Kettenglieds 52 ein, um hintereinander angeordnete Kettenglieder 52 auf Zug belastbar miteinander zu verbinden.

An einer der Kettenachsen 64 jedes Paares ist dabei ferner eine drehbare Führungsrolle 68 angeordnet. Diese Führungsrolle 68 kann einerseits die Förderkette 50 während ihrer Bewegung entlang der Verfahrrichtung 5 führen, d.h. die Förderkette 50 kann als Rollenkette ausgebildet sein. Andererseits können diese Führungsrollen 68, wie nachfolgend erläutert, als Koppelstrukturen 69 dienen, um mit einem Förderrad 16 formschlüssig zusammenwirken zu können.

Es versteht sich von selbst, dass auch eine Transportbandförderanordnung 80 mit nur einer Förderkette 50 möglich ist. Hierbei ist die Förderkette 50 vorzugsweise mittig der Trittstufen 7 angeordnet.

Fig. 5 zeigt ein Beispiel eines solchen Förderrades 16. Das Förderrad 16 weist entlang seines Außenumfangs angeordnete Mitnehmerstrukturen 73 in Form von Ausnehmungen 72 auf. Diese Ausnehmungen 72 sind bezüglich ihrer Größe und Form in etwa komplementär zu den als Koppelstrukturen 69 dienenden Führungsrollen 68 ausgebildet.

Um die Förderkette 50 nun mithilfe des Förderrades 16 sowohl umlenken als auch durch Rotieren des Förderrades 16 fördern zu können, greifen die an der Förderkette 50 angebrachten Führungsrollen 68 in die an dem Förderrad 16 ausgebildeten Ausnehmungen 72 ein. Wird das Förderrad 16 rotiert, werden somit die formschlüssig eingreifenden Koppelstrukturen 69 von den Mitnehmerstrukturen 73 des Förderrades 16 mitgenommen und die Förderkette 50 mitsamt den daran befestigten Trittstufen 7 bewegt.

Um bei einem solchen Umlenken und Fördern der Förderkette 50 auftretende Polygoneffekte zu reduzieren, sind entlang der Umfangsrichtung des Förderrades 16 zwischen benachbarten Mitnehmerstrukturen 73 Stützstrukturen 71 vorgesehen. Diese Stützstrukturen 71 sind im dargestellten Beispiel als von der seitlichen Stirnfläche des Förderrades 16 abragende Stifte oder Bolzen 70 ausgebildet.

Alternativ könnte die Stützstruktur 71 auch mit anderen Geometrien vorgesehen sein. Beispielsweise könnten, wie in Fig. 5 mit unterbrochener Linie dargestellt, teilkreisförmige, kulissenartig abragende Stützstrukturen 74 zwischen benachbarten Mitnehmerstrukturen 73 ausgebildet sein. Als weitere Alternative könnte angrenzend an die seitliche Stirnfläche des Förderrades 16 eine im Durchmesser kleinere kreisförmige Scheibe als Stützstruktur 71 dienen.

Unabhängig von der konkreten Ausgestaltung der Stützstruktur 71 ist diese dazu ausgeführt, die Schlaufen 56 der Kettenglieder 52 in einem Bereich zwischen deren Kettengliedverbinderaufnahmebereichen 54 von radial innen her abzustützen und diese dadurch während des Rotierens des Förderrades 16 nach radial außen hin zu biegen.

Dadurch, dass die einzelnen Kettenglieder 52 aufgrund ihrer mit Faserverbundmaterial 57 ausgebildeten Schlaufen 56 quer zur Zugrichtung 61 biegeelastisch sind und während des Umlenkens der Förderkette 50 an dem Förderrad 16 die Stützstrukturen 71 eben ein solches Biegen der Kettenglieder 52 erzwingen können, kann bewirkt werden, dass sich die Form der Kettenglieder 52 im gebogenen Zustand der kreisförmigen Außenkontur des Förderrades 16 angleicht und auf diese Weise Polygoneffekte vermieden werden.

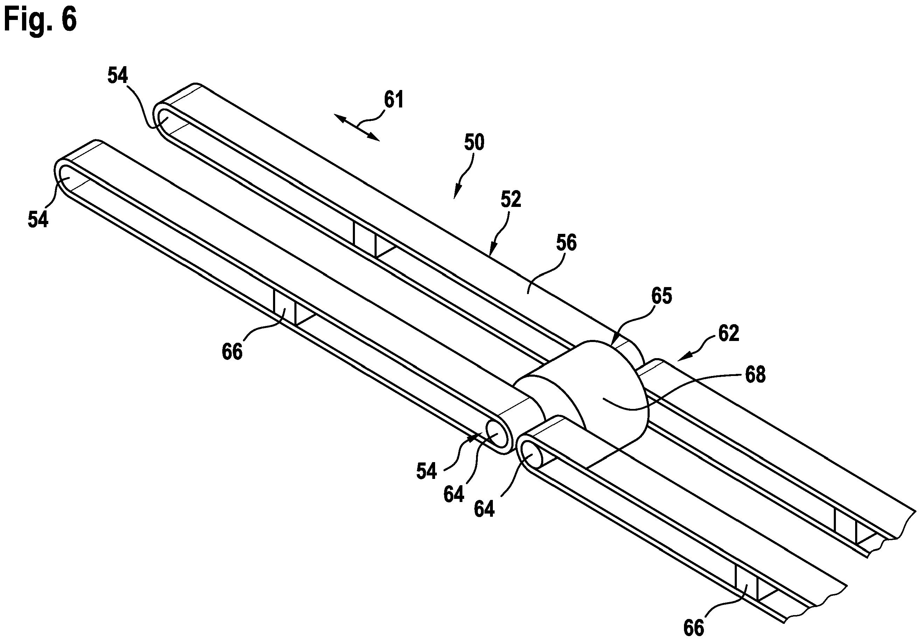

In Fig. 6 ist eine alternative Ausgestaltung einer Förderkette 50 dargestellt. Die Komponenten der Förderkette 50 entsprechen dabei hinsichtlich vieler Merkmale denjenigen der in Fig. 3 dargestellten Förderkette 50. Allerdings sind die Kettengliedverbinder 62 in anderer Weise ausgestaltet. An einem Basiselement 65 ist eine Führungsrolle 68 ausgebildet und an beiden seitlichen Stirnflächen dieser Führungsrolle 68 ragen jeweils Paare von Kettenachsen 64 ab.

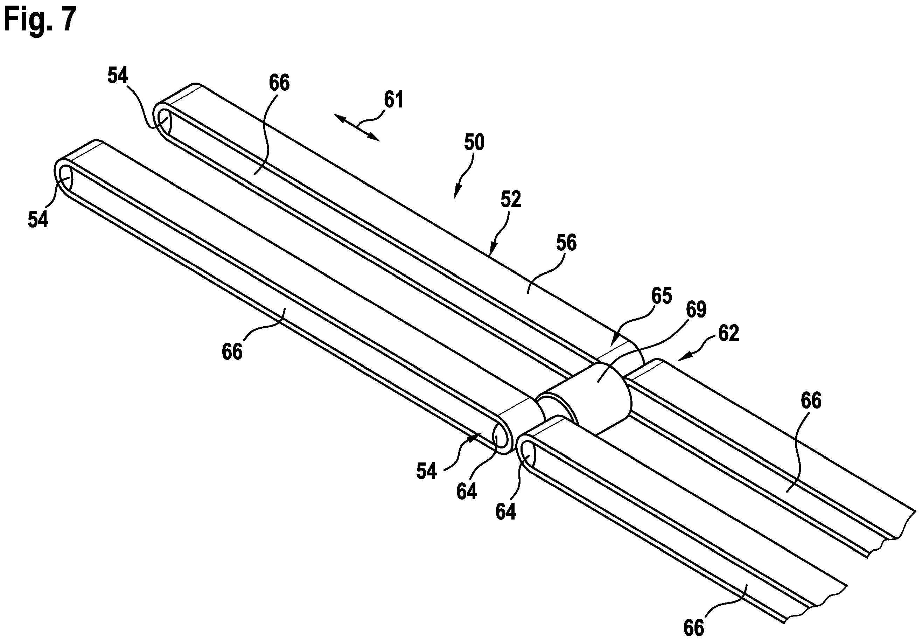

In Fig. 7 ist ebenfalls eine alternative Ausgestaltung einer Förderkette 50 dargestellt. Die Kettengliedverbinder 62 sind einstückig ausgestaltet. Das Basiselement 65 weist als Koppelstruktur 69 einen Eingriffsbolzen auf, an dessen beiden seitlichen Stirnflächen jeweils Paare von Kettenachsen 64 ausgebildet sind. Die Abstandhalter 66 erstrecken sich über die gesamte Länge der Schlaufe 56 zwischen den Kettengliedverbinderaufnahmebereichen 54. Beispielsweise können die Abstandhalter 66 beim Zusammenbau der Förderkette 50 durch ein Vulkanisierverfahren in die Schlaufen 56 eingebracht werden, wobei durch Vulkanisieren die Kettenachsen 64 in der Schlaufe 56 dauerhaft befestigt sind. Das Material des Abstandhalters kann eine andere Shore-Härte aufweisen als das Elastomer-Matrixmaterial des Faserverbundwerkstoffes.

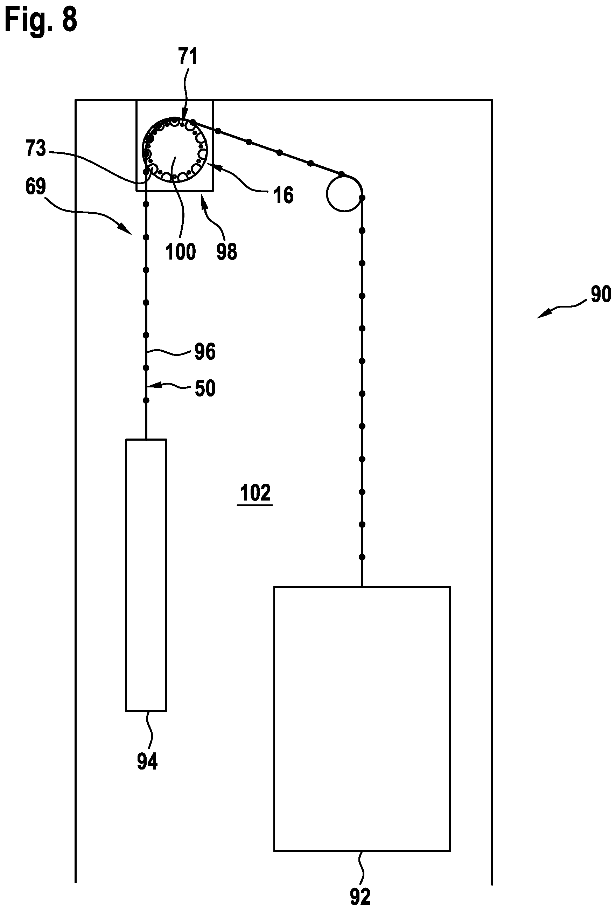

Abschließend wird darauf hingewiesen, dass Ausführungsformen der hierin beschriebenen Förderketten 50 auch in Aufzuganlagen 90 verwendet werden können. Fig. 8 zeigt eine sehr schematische Darstellung einer solchen Aufzuganlage 90, bei der eine Aufzugkabine 92 und ein Gegengewicht 94 über ein Tragmittel 96 miteinander verbunden sind.

Das Tragmittel 96 ist in diesem Fall nicht wie herkömmlich als durchgehende Tragriemen oder Tragseile, sondern als Förderkette 50 ausgebildet. Ein Antrieb 98 kann als Treibscheibe 100 eine Ausgestaltung des zuvor beschriebenen Förderrades 16 aufweisen, um die Förderkette 50 bewegen zu können. An der Förderkette 50 vorgesehene Koppelstrukturen 69 können hierbei formschlüssig mit entsprechenden Mitnehmerstrukturen 73 an dem Förderrad 16 zusammenwirken. Der mögliche formschlüssige Eingriff zwischen dem Förderrad 16 und der Förderkette 50 kann hierbei ein sehr effizientes und weitestgehend schlupffreies Fördern der Aufzugkabine 92 und des Gegengewichts 94 ermöglichen.

In einer alternativen Ausgestaltung (nicht dargestellt) kann der Antrieb 98 anstatt, wie in Fig. 8 dargestellt, stationär in dem Aufzugschacht 102 angeordnet zu sein, an der Aufzugkabine 92 oder an dem Gegengewicht 94 angebracht sein und mit diesem mitbewegt werden. In diesem Fall kann die Förderkette 50 beispielweise stationär in dem Aufzugschacht 102 befestigt werden und die Aufzugkabine 92 bzw. das Gegengewicht 94 können sich mithilfe ihres Antriebs 98 und des von diesem angetriebenen Förderrades 16 an der Förderkette 50 emporziehen bzw. ablassen. Der formschlüssige Eingriff zwischen dem Förderrad 16 und der Förderkette 50 ermöglicht dabei ein sicheres und positionsgenaues Verfahren der genannten Komponenten 92, 94. Gegebenenfalls können sich entlang einer einzelnen Förderkette 50 auch mehrere Aufzugkabinen 92 bewegen. Bei der Anordnung des Antriebes 98 an der Aufzugskabine 92 kann das Gegengewicht entfallen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Kettenglied (52) einer, in einer Zugrichtung (61) hochbelastbaren Förderkette (50) eines Fahrsteiges, einer Fahrtreppe (1) oder eines Aufzugs (90), wobei das Kettenglied (52) aufweist:
- zwei an entgegengesetzten Enden des Kettenglieds (52) angeordnete Kettengliedverbinderaufnahmebereiche (54) jeweils zur Aufnahme eines Kettengliedverbinders (62), welcher zwei benachbarte Kettenglieder (52) miteinander mechanisch derart verbindet, dass in Zugrichtung (61) eine Zugkraft von einem Kettenglied (52) auf das benachbarte Kettenglied (52) übertragbar ist;
- eine die zwei Kettengliedverbinderaufnahmebereiche (54) umschlingende ringförmig geschlossene Schlaufe (56), wobei die Schlaufe (56) mit einem Faserverbundwerkstoff (57) ausgebildet ist,
**dadurch gekennzeichnet, dass**
der die Schlaufe (56) bildende Faserverbundwerkstoff (57) Fasern (58) aufweist, welche in ein Elastomer- Matrixmaterial (60) eingebettet sind und welche sich längs entlang der ringförmigen Schlaufe (56) erstrecken, wobei durch das Elastomer- Matrixmaterial (60) das Kettenglied (52) ohne plastische Deformationen am Faserverbundwerkstoff (57) in einer Querrichtung zur Zugrichtung (61) in Krümmungsradien kleiner als 500mm reversibel biegbar ist.

2. Kettenglied (52) nach Anspruch 1, wobei durch die Schlaufe in der Zugrichtung (61) Kräfte von mindestens 50kN aufnehmbar sind, welche auf die Kettengliedverbinderaufnahmebereiche (54) in entgegengesetzten Richtungen wirken und die Dehnung des Kettengliedes bei einer Zugkraft von 50kN kleiner oder gleich 1% ist.

3. Kettenglied (52) nach Anspruch 1 oder 2, wobei beim reversiblen Biegen der Schlaufe (56) in Krümmungsradien zwischen 50mm und 500mm, die in Querrichtung auf den Faserverbundwerkstoff (57) wirkende Biegekraft zwischen ¹/₁₀₀ und ¹/_{10'000} der maximal zulässigen Kraft in der Zugrichtung (61) beträgt.

4. Kettenglied (52) nach einem der vorangehenden Ansprüche, wobei die im Elastomer- Matrixmaterial (60) angeordneten Fasern (58) im Wesentlichen parallel zueinander und parallel zur Zugrichtung (61) angeordnet sind.

5. Kettenglied (52) nach einem der vorangehenden Ansprüche, wobei der die Schlaufe (56) bildende Faserverbundwerkstoff (57) bandförmig ausgebildet ist.

6. Kettenglied (52) nach einem der vorangehenden Ansprüche, wobei der Faserverbundwerkstoff (57) Fasern (58) ausgewählt aus der Gruppe umfassend Kohlenstofffasern, Glasfasern und Metallfasern aufweist.

7. Kettenglied (52) nach einem der vorangehenden Ansprüche, wobei sich wenigstens eine Faser (58) des Faserverbundwerkstoffs (57) ringförmig gewickelt mehrfach entlang der Schlaufe (56) erstreckt.

8. Kettenglied (52) nach einem der vorangehenden Ansprüche, wobei die Schlaufe (56) einen Umfang von wenigstens 800mm aufweist.

9. Förderkette (50) für einen Fahrsteig, eine Fahrtreppe (1) oder einen Aufzug (90), wobei die Förderkette eine Mehrzahl von Kettengliedern (52) gemäß einem der Ansprüche 1 bis 8 und eine Mehrzahl von Kettengliedverbindern (62) aufweist, wobei benachbarte Kettenglieder jeweils über in deren Kettengliedverbinderaufnahmebereiche (54) eingreifende Kettengliedverbinder miteinander auf Zug belastbar verbunden sind.

10. Förderkette (50) nach Anspruch 9, wobei die Kettengliedverbinder (62) jeweils ein Basiselement (65) aufweisen, von dem seitlich zwei zueinander beabstandete Kettenachsen (64) abragen, wobei eine Kettenachse (64') in den Kettengliedverbinderaufnahmebereich (54') eines Kettenglieds (52') eingreift und die andere Kettenachse (64") in den Kettengliedverbinderaufnahmebereich (54") des benachbarten Kettenglieds (52") eingreift.

11. Transportbandförderanordnung (80) für einen Fahrsteig oder eine Fahrtreppe (1), wobei die Transportbandförderanordnung aufweist:
eine Förderkette (50) gemäß einem der Ansprüche 9 oder 10;
mehrere Paletten bzw. Trittstufen (7), welche an der Förderkette befestigt sind;
ein Förderrad (16) zum Fördern der Förderkette;
einen Antrieb (25) zum Rotieren des Förderrades;
wobei an dem Förderrad nahe eines Außenumfangs des Förderrades mehrere Mitnehmerstrukturen (73) zum Zusammenwirken mit der Förderkette und zum Fördern der Förderkette in Zugrichtung (61) durch Rotieren des Förderrades angeordnet sind;
wobei an dem Förderrad nahe des Außenumfangs ferner wenigstens eine Stützstruktur (71) angeordnet ist, welche zumindest jeweils in Umfangsrichtung zwischen benachbarten Mitnehmerstrukturen (73) angeordnet ist und welche dazu ausgelegt ist, Schlaufen (56) der Förderkette in einem Bereich zwischen deren Kettengliedverbinderaufnahmebereichen (54) von radial innen her abzustützen und dadurch während des Rotierens des Förderrades nach radial außen zu biegen.

12. Transportbandförderanordnung (80) nach Anspruch 11, wobei die Paletten bzw. Trittstufen (7) als Kettengliedverbinder (62) wirken und von diesen seitlich jeweils zwei zueinander beabstandete Kettenachsen (64) abragen, wobei eine Kettenachse in den Kettengliedverbinderaufnahmebereich (54) eines Kettenglieds (52) eingreift und die andere Kettenachse in den Kettengliedverbinderaufnahmebereich des benachbarten Kettenglieds eingreift.

13. Transportbandförderanordnung (80) nach Anspruch 11 oder 12, wobei an der Förderkette (50) Koppelstrukturen (69) vorgesehen sind, die an den Kettengliedverbinderaufnahmebereichen (54) befestigt sind und die seitlich neben den Schlaufen (56) angeordnet sind;
wobei die Mitnehmerstrukturen (73) entlang des Außenumfangs des Förderrades (16) angeordnet sind und dazu ausgebildet sind, mit den Koppelstrukturen (69) formschlüssig zusammenzuwirken;
wobei die Stützstruktur (71) an einer zu den Schlaufen (56) gerichteten Stirnseite des Förderrades (16) angeordnet ist und von dieser Stirnseite in Axialrichtung abragt.

14. Transportbandförderanordnung (80) nach Anspruch 13, wobei die Koppelstrukturen (69) als um eine Achse drehbare Führungsrollen (68) ausgebildet sind, deren Achse in jeweils einen der Kettengliedverbinderaufnahmebereiche (54) eingreift; wobei die Mitnehmerstrukturen (73) als komplementär zu den Führungsrollen (68) geformte Ausnehmungen (72) in dem Förderrad (16) ausgebildet sind.

15. Fahrsteig oder Fahrtreppe (1), aufweisend eine Transportbandförderanordnung (80) gemäß einem der Ansprüche 11 bis 14.

16. Aufzugsanlage (90) aufweisend:
mindestens eine Aufzugskabine (92),
mindestens eine Förderkette (50) gemäß einem der Ansprüche 9 oder 10 und mindestens einen Antrieb (98) zum Antreiben der Förderkette,
wobei der Antrieb ein Förderrad (16) aufweist, an dem nahe eines Außenumfangs des Förderrades mehrere Mitnehmerstrukturen (73) zum Zusammenwirken mit der Förderkette und zum Fördern der Förderkette in Zugrichtung durch Rotieren des Förderrades angeordnet sind;
wobei an dem Förderrad nahe des Außenumfangs ferner wenigstens eine Stützstruktur (71) angeordnet ist, welche zumindest jeweils in Umfangsrichtung zwischen benachbarten Mitnehmerstrukturen angeordnet ist und welche dazu ausgelegt ist, Schlaufen (56) der Förderkette in einem Bereich zwischen deren Kettengliedverbinderaufnahmebereichen (54) von radial innen her abzustützen und dadurch während des Rotierens des Förderrades (16) nach radial außen zu biegen.

## Claims

1. Chain link (52) of a conveyor chain (50) of a moving walkway, an escalator (1) or an elevator (90), which conveyor chain has high tensile strength in a tensile direction (61), the chain link (52) comprising:
- two chain link connector receiving regions (54) arranged at opposite ends of the chain link (52), each intended for receiving a chain link connector (62) which mechanically connects two adjacent chain links (52) to one another such that a tensile force can be transmitted from one chain link (52) to the adjacent chain link (52) in the tensile direction (61);
- an annularly closed loop (56) which wraps around the two chain link connector receiving regions (54), the loop (56) being formed with a fiber composite material (57), **characterized in that** the fiber composite material (57) forming the loop (56) comprises fibers (58) which are embedded in an elastomer matrix material (60) and extend longitudinally along the annular loop (56), it being possible, due to the elastomer matrix material (60), to reversibly bend the chain link (52) in a transverse direction with respect to the tensile direction (61) in radii of curvature smaller than 500 mm without plastic deformations on the fiber composite material (57).

2. Chain link (52) according to claim 1, wherein forces of at least 50 kN can be absorbed by the loop in the tensile direction (61), which forces act on the chain link connector receiving regions (54) in opposite directions, and the elongation of the chain link at a tensile force of 50 kN is less than or equal to 1%.

3. Chain link (52) according to either claim 1 or claim 2, wherein, when the loop (56) reversibly bends in radii of curvature of between 50 mm and 500 mm, the bending force acting on the fiber composite material (57) in the transverse direction is between ¹/₁₀₀ and ¹/_{10,000} of the maximum permissible force in the tensile direction (61).

4. Chain link (52) according to any of the preceding claims, wherein the fibers (58) arranged in the elastomer matrix material (60) are arranged substantially parallel to one another and parallel to the tensile direction (61).

5. Chain link (52) according to any of the preceding claims, wherein the fiber composite material (57) forming the loop (56) is strip-shaped.

6. Chain link (52) according to any of the preceding claims, wherein the fiber composite material (57) comprises fibers (58) selected from the group comprising carbon fibers, glass fibers and metal fibers.

7. Chain link (52) according to any of the preceding claims, wherein at least one fiber (58) of the fiber composite material (57) extends along the loop (56) multiple times so as to be wound annularly.

8. Chain link (52) according to any of the preceding claims, wherein the loop (56) has a circumference of at least 800 mm.

9. Conveyor chain (50) for a moving walkway, an escalator (1) or an elevator (90), wherein the conveyor chain comprises a plurality of chain links (52) according to any of claims 1 to 8 and a plurality of chain link connectors (62), wherein adjacent chain links are each connected to one another, in a manner capable of bearing tensile loads, via chain link connectors which engage in their chain link connector receiving regions (54).

10. Conveyor chain (50) according to claim 9, wherein the chain link connectors (62) each have a base element (65) from which two mutually spaced chain pins (64) project laterally, wherein one chain pin (64') engages in the chain link connector receiving region (54') of one chain link (52') and the other chain pin (64") engages in the chain link connector receiving region (54") of the adjacent chain link (52").

11. Conveyor belt arrangement (80) for a moving walkway or an escalator (1), wherein the conveyor belt arrangement comprises:
a conveyor chain (50) according to either claim 9 or claim 10;
a plurality of pallets or treads (7) which are fastened to the conveyor chain;
a conveyor wheel (16) for conveying the conveyor chain;
a drive (25) for rotating the conveyor wheel;
wherein a plurality of driver structures (73) are arranged on the conveyor wheel near an outer circumference of the conveyor wheel in order to interact with the conveyor chain and convey the conveyor chain in the tensile direction (61) by rotating the conveyor wheel;
wherein at least one support structure (71) is also arranged on the conveyor wheel near the outer circumference, which support structure is arranged at least in each case in the circumferential direction between adjacent driver structures (73) and is designed to support loops (56) of the conveyor chain in a region between the chain link connector receiving regions (54) thereof from radially inside and thereby bend radially outwards during the rotation of the conveyor wheel.

12. Conveyor belt arrangement (80) according to claim 11, wherein the pallets or treads (7) act as chain link connectors (62) and two mutually spaced chain pins (64) project laterally from each of said connectors, wherein one chain pin engages in the chain link connector receiving region (54) of one chain link (52) and the other chain pin engages in the chain link connector receiving region of the adjacent chain link.

13. Conveyor belt assembly (80) according to either claim 11 or claim 12, wherein coupling structures (69) are provided on the conveyor chain (50), which coupling structures are fastened to the chain link connector receiving regions (54) and are arranged laterally next to the loops (56);
wherein the driver structures (73) are arranged along the outer circumference of the conveyor wheel (16) and are designed to interact with the coupling structures (69) in a form-fitting manner;
wherein the support structure (71) is arranged on an end face of the conveyor wheel (16) facing the loops (56) and projects from this end face in the axial direction.

14. Conveyor belt arrangement (80) according to claim 13, wherein the coupling structures (69) are designed as guide rollers (68) which can rotate about a pin, the pins of which rollers each engage in one of the chain link connector receiving regions (54);
wherein the driver structures (73) are designed as recesses (72) in the conveyor wheel (16) that are shaped so to be complementary to the guide rollers (68).

15. Moving walkway or escalator (1), comprising a conveyor belt arrangement (80) according to any of claims 11 to 14.

16. Elevator system (90) comprising:
at least one elevator car (92), at least one conveyor chain (50) according to either claim 9 or claim 10, and at least one drive (98) for driving the conveyor chain, wherein the drive comprises a conveyor wheel (16) on which a plurality of driver structures (73) are arranged near an outer circumference of the conveyor wheel in order to interact with the conveyor chain and convey the conveyor chain in the tensile direction by rotating the conveyor wheel;
wherein at least one support structure (71) is also arranged on the conveyor wheel near the outer circumference, which support structure is arranged at least in each case in the circumferential direction between adjacent driver structures and is designed to support loops (56) of the conveyor chain in a region between the chain link connector receiving regions (54) thereof from radially inside and thereby bend radially outwards during the rotation of the conveyor wheel (16).

## Revendications

1. Maillon de chaîne (52) d'une chaîne transporteuse (50) d'un tapis roulant, d'un escalier roulant (1) ou d'un ascenseur (90) pouvant résister à des contraintes élevées dans une direction de traction (61), le maillon de chaîne (52) présentant :
deux zones de réception de raccord de maillon de chaîne (54) agencées aux extrémités opposées du maillon de chaîne (52), lesquelles zones servent à recevoir respectivement un raccord de maillon de chaîne (62) qui raccorde mécaniquement deux maillons de chaîne (52) adjacents de telle sorte qu'une force de traction exercée par un maillon de chaîne (52) dans le sens de traction (61) est transférable au maillon de chaîne adjacent (52) ;
une boucle annulaire fermée (56) s'enroulant autour des deux zones de réception de raccord de maillon de chaîne (54), la boucle (56) étant formée avec un matériau composite fibreux (57), **caractérisé en ce que** le matériau composite fibreux (57) formant la boucle (56) présente des fibres (58), qui sont noyées dans un matériau matriciel élastomère (60) et qui s'étendent longitudinalement le long de la boucle annulaire (56), le maillon de chaîne (52) pouvant être fléchi de manière réversible sans déformations plastiques sur le matériau composite fibreux (57) dans une direction transversale de la direction de traction (61) grâce au matériau matriciel élastomère (60), dans des rayons de courbure inférieurs à 500mm.

2. Maillon de chaîne (52) selon la revendication 1, dans lequel la boucle peut absorber des forces d'au moins 50kN dans la direction de traction (61), qui agissent sur les zones de réception de raccord de maillon de chaîne (54) dans des directions opposées, et l'allongement du maillon de chaîne lors d'une force de traction de 50kN est inférieur ou égal à 1%.

3. Maillon de chaîne (52) selon la revendication 1 ou 2, dans lequel, lors de la flexion réversible de la boucle (56) dans des rayons de courbure compris entre 50mm et 500mm la force de flexion agissant sur le matériau composite fibreux (57) dans la direction transversale se situe entre 1/100 et ¹/_{10.000} de la force maximale autorisée dans la direction de traction (61).

4. Maillon de chaîne (52) selon l'une des revendications précédentes, dans lequel les fibres (58) agencées dans le matériau matriciel élastomère (60) sont agencées essentiellement parallèlement les unes aux autres et parallèlement à la direction de traction (61).

5. Maillon de chaîne (52) selon l'une des revendications précédentes, dans lequel le matériau composite fibreux (57) formant la boucle (56) est conçu dans la forme d'une bande.

6. Maillon de chaîne (52) selon l'une des revendications précédentes, dans lequel le matériau composite fibreux (57) présente des fibres (58) choisies dans le groupe comprenant des fibres de carbone, des fibres de verre et des fibres métalliques.

7. Maillon de chaîne (52) selon l'une des revendications précédentes, dans lequel au moins une fibre (58) du matériau composite fibreux (57) s'étend, enroulée annulairement, plusieurs fois le long de la boucle (56).

8. Maillon de chaîne (52) selon l'une des revendications précédentes, dans lequel la boucle (56) présente une circonférence d'au moins 800mm.

9. Chaîne transporteuse (50) pour un tapis roulant, un escalier roulant (1) ou un ascenseur (90), la chaîne transporteuse présentant une pluralité de maillons de chaîne (52) selon l'une des revendications 1 à 8 et une pluralité de raccords de maillon de chaîne (62), les maillons de chaîne adjacents étant chacun raccordés les uns aux autres de manière résistante à la traction par l'intermédiaire de raccords de maillon de chaîne s'engageant respectivement dans leurs zones de réception de raccord de maillon de chaîne (54).

10. Chaîne transporteuse (50) selon la revendication 9, dans laquelle les raccords de maillon de chaîne (62) présentent chacun un élément de base (65) à partir duquel saillissent deux axes de chaîne espacés l'un de l'autre (64), un axe de chaîne (64') s'engageant dans la zone de réception de raccord de maillon de chaîne (54') d'un maillon de chaîne (52') et l'autre axe de chaîne (64") s'engageant dans la zone de réception de raccord de maillon de chaîne (54") du maillon de chaîne adjacent (52").

11. Convoyeur à bande transporteuse (80) pour un tapis roulant ou un escalier roulant (1), le convoyeur à bande transporteuse présentant :
une chaîne transporteuse (50) selon l'une des revendications 9 ou 10 ;
plusieurs palettes ou marches (7) fixées à la chaîne transporteuse ;
une roue transporteuse (16) afin de transporter la chaîne transporteuse ;
un entraînement (25) afin de faire tourner la roue transporteuse ;
plusieurs structures d'entraînement (73) étant agencées sur la roue transporteuse près d'une circonférence extérieure de la roue transporteuse afin de coopérer avec la chaîne transporteuse et de transporter la chaîne transporteuse dans la direction de traction (61) par la rotation de la roue transporteuse ;
en outre au moins une structure de support (71) étant agencée sur la roue transporteuse près de la circonférence extérieure, laquelle structure est agencée au moins respectivement dans la direction circonférentielle entre les structures d'entraînement adjacentes (73) et est conçue afin de soutenir radialement de l'intérieur les boucles (56) de la chaîne transporteuse dans une zone entre les zones de réception de raccord de maillon de chaîne (54) et ainsi de fléchir ces boucles radialement vers l'extérieur lors de la rotation de la roue transporteuse.

12. Convoyeur à bande transporteuse (80) selon la revendication 11, dans lequel les palettes ou les marches (7) agissent comme raccords de maillon de chaîne (62) et à partir desquels saillissent latéralement deux axes de chaîne espacés l'un de l'autre (64), un axe de chaîne s'engageant dans la zone de réception de raccord de maillon de chaîne (54) d'un maillon de chaîne (52) et l'autre axe de chaîne s'engageant dans la zone de réception de raccord de maillon de chaîne du maillon de chaîne adjacent.

13. Convoyeur à bande transporteuse (80) selon la revendication 11 ou 12, dans lequel des structures de couplage (69) sont conçues sur la chaîne transporteuse (50), lesquelles structures sont fixées aux zones de réception de raccord de maillon de chaîne (54) et sont agencées latéralement à côté des boucles (56) ;
les structures d'entraînement (73) étant disposées le long de la circonférence extérieure de la roue transporteuse (16) et étant conçues afin de coopérer avec les structures d'accouplement (69) par complémentarité de forme ;
la structure de support (71) étant agencée sur une face frontale de la roue transporteuse (16) dirigée vers les boucles (56) et saillissant dans la direction axiale à partir de cette face frontale.

14. Convoyeur à bande transporteuse (80) selon la revendication 13, les structures de couplage (69) étant conçues comme des rouleaux de guidage (68) pouvant être en rotation autour d'un axe, lequel axe s'engage dans respectivement une des zones de réception de raccord de maillon de chaîne (54) ;
les structures d'entraînement (73) étant conçues comme des évidements (72) complémentaires aux rouleaux de guidage (68) dans la roue transporteuse (16).

15. Tapis roulant ou escalier roulant (1) présentant un convoyeur à bande transporteuse (80) selon l'une des revendications 11 à 14.

16. Système d'ascenseur (90) présentant :
au moins une cabine d'ascenseur (92), au moins une chaîne transporteuse (50) selon l'une des revendications 9 ou 10 et au moins un entraînement (98) afin d'entraîner la chaîne transporteuse, l'entraînement présentant une roue transporteuse (16) sur laquelle sont agencées des structures d'entraînement (73) près d'une circonférence extérieure de la roue transporteuse afin de coopérer avec la chaîne transporteuse et de transporter la chaîne transporteuse dans la direction de traction par la rotation de la roue transporteuse ;
en outre au moins une structure de support (71) étant agencée sur la roue transporteuse près de la circonférence extérieure, laquelle structure est agencée au moins respectivement dans la direction circonférentielle entre les structures d'entraînement adjacentes et est conçue afin de soutenir les boucles (56) de la chaîne transporteuse dans une zone entre les zones de réception de raccord de maillon de chaîne (54) radialement de l'intérieur et ainsi de fléchir ces boucles radialement vers l'extérieur lors de la rotation de la roue transporteuse (16).
